# EUROPEAN PATENT SPECIFICATION

(11) **EP 3 591 584 B1**
(45) Date of publication and mention of the grant of the patent: **07.02.2024**
(21) Application number: 18181514.3
(22) Date of filing: 03.07.2018
(51) Int. Cl.: G06N 3/084, G06N 3/045, G06N 3/047, G06N 3/063, G06N 3/0495

(54) **PROBABILISTIC TRAINING FOR BINARY NEURAL NETWORKS**
PROBABILISTISCHES TRAINING FÜR BINÄRE NEURONALE NETZE
FORMATION PROBABILISTE POUR RÉSEAUX NEURONAUX BINAIRES

(43) Date of publication of application: 08.01.2020
(73) Proprietor: Robert Bosch GmbH, 70442 Stuttgart (DE)
(72) Inventor: Welling, Max, 1402GN Bussum (NL); Peters, Jorn, 1091An Amsterdam (NL); Genewein, Tim, 70174 Stuttgart (DE)

(56) References cited:
- W. Roth, F. Pernkopf: "Discrete-valued neural networks using variational inference", OpenReview.net (revision: 18 Dec 2017, 13:53), 18 December 2017 (2017-12-18), XP055532912, Retrieved from the Internet: URL:https://openreview.net/references/pdf? id=SyB85NBMG [retrieved on 2018-12-11]
- C. BALDASSI ET AL: "Role of synaptic stochasticity in training low-precision neural networks", PHYSICAL REVIEW LETTERS, vol. 120, no. 26, 268103, 29 June 2018 (2018-06-29), XP055533125, DOI: 10.1103/PhysRevLett.120.268103
- O. Shayer et al: "Learning discrete weights using the local reparameterization trick", arXiv:1710.07739v3, 2 February 2018 (2018-02-02), XP055533130, Retrieved from the Internet: URL:https://arxiv.org/abs/1710.07739v3 [retrieved on 2018-12-11]
- Y. UMUROGLU ET AL: "FINN: a framework for fast, scalable binarized neural network inference", PROCEEDINGS OF THE 2017 ACM/SIGDA INTERNATIONAL SYMPOSIUM ON FIELD-PROGRAMMABLE GATE ARRAYS (FPGA'17), 22 February 2017 (2017-02-22), pages 65-74, XP055533133, DOI: 10.1145/3020078.3021744

## Description

The present invention relates to an improved training method for neural networks that are at least partially implemented as binary neural networks where all internal parameters can only have one of two possible values.

### Background

Deep neural networks have become a standard tool for modern machine-learning tasks with complex, high-dimensional inputs, such as image, video or audio data. It is desirable to implement deep neural networks on less expensive and less power-hungry hardware, especially for mobile, embedded or automotive applications.

To this end, binary neural networks have been proposed in recent scientific literature. In these networks, the weights used as internal parameters, as well as the output activations of neurons, are all binary, i.e., they can only have one of two possible values (commonly -1 and +1). The advantage of these networks is that the most common computational operation in fully connected and convolutional layers, namely multiply-accumulate (MAC) which corresponds to a matrix multiplication between a layer's input and a weight matrix or weight tensor, may be computed very efficiently by using bit-wise XNOR operations in combination with bit-wise summation. A nonlinearity that then produces the final output may be brought about using the sign function.

Such binary neural networks do not require hardware units for floating-point multiplication. Rather, bitwise XNOR, bit-counting and the sign function may be implemented in fast and energy-efficient hardware. An exemplary hardware implementation is given in WO 2018/026 560 A1.

The state-of-the art approach for training such networks duplicates the processing chain of the binary neural network in software and assigns a full-precision "shadow weight" to each binary weight. When back-propagating the feedback of a loss function, this "shadow weight" is updated. But whenever the "shadow weight" is used, be it for performing computations in the network or for use in the final binary neural network, it is rounded into a binary weight.

(W. Roth, F. Pernkopf: "Discrete-valued neural networks using variational inference", https://openreview.net/references/pdf?id=SyB85NBMG (2017)) discloses a method for training a binary neural network that regards the weights with which neuron inputs are processed into neuron pre-activations as random variables. Consequently, the pre-activations and the output values produced by the neurons become random variables according to respective distributions as well.

(C. Baldassi et al., "Role of synaptic stochasticity in training low-precision neural networks", Physical Review Letters vol. 120, no. 26, DOI: 10.1103/PhysRevLett.120.268103 (2018)) discloses a method to obtain binary weights for a binary neural network by means of a gradient descent procedure on a set of real values that parametrize a probability distribution over the binary synapses.

(O. Shayer et al., "Learning discrete weights using the local reparameterization trick", arXiv:1710.07739v3 (2018)) discloses a further method to train binary neural networks using stochastic parameters. To this end, local reparameterization, previously used to train Gaussian distributed weights, is adapted.

### Disclosure of the invention

A method for manufacturing a sensing system for the environment of a vehicle or a portable sensing system according to claim 1 is claimed. Furthermore, a control system for a vehicle according to claim 9, comprising at least one sensing system manufactured using the method of any one of claims 1 to 8 is claimed.

Said method is built upon on a method for training an artificial neural network that is at least partially implemented as a binary neural network. In such a network, both the weights associated with at least one layer and the outputs of the at least one layer can only have one of two possible values, e.g., -1 or +1.

The training method comprises receiving training input values for the inputs of the artificial neural network or a part of it. For example, the method may be performed on the neural network as a whole, on an individual binary layer of the neural network, or on a stack of several such binary layers. Specifically, it is possible to use mixed neural networks that comprise both full-precision layers and binary layers. For example, in an application where it is difficult to binarize the input, the input layer may be a full-precision layer. In an application where more than a single-bit activation of the final layer is needed, e.g., in regression tasks, the final layer may be a full-precision layer. The other layers may be binary layers. In such a mixed network, a full-precision first and/or final layer contribute only marginally to the total number of parameters and the total number of computations. Therefore, such networks may still be implemented efficiently on hardware, which is then not completely multiplier-free, but may have a very low number of floating-point multiply-accumulate units, compared to standard hardware for full-precision neural networks.

The training method further comprises processing the training input values according to a processing chain defined by the artificial neural network or part of it, wherein the weights are replaced by training weights wₗⱼ. This means that the given artificial neural network defines the number of layers, the number of neurons per layer, the types of the layers, and the interconnections between neurons of adjacent layers that are to be used in the processing chain. But the weights are not yet the final ones that will be used in the artificial neural network. Rather, the weights are training weights wₗⱼ, i.e., starting from default values, the weights wₗⱼ are free parameters, and the goal of the training is to obtain the final values of the weights wₗⱼ. The processing yields output values.

A loss function is applied to the obtained output values. This loss function is configured to rate how good the output values are in the context of the intended application of the artificial neural network, in the situation denoted by the training input values. For example, in the training data set, the training input values may come in combination with corresponding training output values, and the loss function may rate how well the obtained output values correspond to the training output values. Alternatively or in combination, the loss function may comprise other criteria, e.g., boundary conditions for the output values.

The training weights wₗⱼ are updated, and the training method branches back to the processing until the rating by the loss function meets a predetermined termination criterion. For example, the training method may start from default values for the training weights wₗⱼ, and the updates to the weights wₗⱼ that produce the best gradient descent with respect to the loss function may be chosen as the next update step.

The actual artificial neural network is configured according to the finally obtained training weights wₗⱼ.

The processing comprises, in at least one layer of the processing chain, determining, for each neuron I in the layer, a distribution Aₗ of pre-activations aₗ. The distribution Aₗ is a weighted sum aₗ of all inputs xⱼ to that neuron I. Each input xⱼ is weighted with a distribution Wₗⱼ of weights wₗⱼ, so that the distributions Wₗⱼ take the place of the training weights wₗⱼ. This means a weight wₗⱼ is a random variable. Whenever a value wₗⱼ is sampled from Wₗⱼ, it can have only one of two possible values (e.g., -1 or +1). At the same time, the probability _{ωlj} that the next sample wₗⱼ will have, e.g., the value of +1 may have any full-precision value between 0 and 1. Likewise, the expectation of the distribution Wₗⱼ may have any full-precision value between -1 and +1 (e.g., 0 if there is a 50:50 chance of drawing -1 or +1, or 0.5 if there is a 75 % chance of drawing +1). The fact that Wₗⱼ is a random variable causes the pre-activations aₗ to become a random variable as well, so the distribution Wₗⱼ of the weights wₗⱼ induces a distribution Aₗ of the aₗ. The xᵢ may be concrete values (e.g., training input values), but the computation remains the same if xᵢ is a random variable as well and the distribution Xᵢ of this random variable xᵢ is used in the weighted sum.

For each neuron I in the layer, the distribution Aₗ of pre-activations aₗ is converted into a distribution Hₗ of output values hₗ by applying a predetermined thresholding function g having two possible output values to the distribution Aₗ.

The result of moving from a treatment of individual values to a treatment of distributions is that very many rounding steps may be avoided. The training using "shadow weights" relied on such rounding upon each and every use of a "shadow weight" during forward propagation, so for determining the output hₗ of a neuron I, at least a number of rounding steps corresponding to the number of weights wₗⱼ on which hₗ depends was required. By contrast, no rounding at all takes place now until the distribution Hₗ of output values hₗ is obtained. Even if a concrete value hₗ needs to be sampled from Hᵢ, the distortion that this sampling introduces is typically much lower than the "rounding noise" that could be introduced by a very frequent use of rounding steps.

The suppression of "rounding noise" makes the training more stable. Specifically, if a gradient descent method with respect to the loss function is used, then the gradient becomes less noisy. This improves the convergence of the training.

The improved training potentially reduces the need for widening layers in binary networks to retain task-performance. Because each binary weight can store less information than a full-precision weight, a binary neural network with a given structure has less processing capacity than a full-precision neural network with the same structure. Therefore, switching from a full-precision network to a binary network for handling one and the same task will often necessitate some widening of the layers, i.e., the adding of more neurons to the layers. It has been observed empirically that training with "shadow weights" may induce some drop in task-accuracy on more complex tasks, which can partially be compensated for by further widening the layers. The improved training potentially suppresses the degradation in task-performance and therefore obviates the need for the further widening.

Moreover, by using suitable priors during training, automatic regularization can be achieved, which means that explicit regularizers are not necessary. The improved training opens up the possibility to use sparsity-inducing priors over weights (or even neurons), which allows pruning (i.e., removal) of unnecessary weights or neurons after training to further increase the efficiency of the trained networks in terms of hardware and resources (i.e., power consumption). For example, Bayesian prior distributions may be used.

The bottom line is that with the improved training, when a given task is to be handled by an artificial neural network, it becomes more practical to at least partially set this network up as a binary neural network that is less demanding in terms of hardware resources and power consumption. This is especially advantageous for applications in vehicles where both the space to insert further hardware and the available power are in short supply. For example, a commonly used hardware for running models of deep full-precision networks comprises graphics processing units (GPUs) with several gigabytes of memory, a memory bandwidth of several gigabits per second, a capability of performing 11 tera-operations per second, and a power consumption of 250 watts. This would draw more than 20 amps from the 12-volt system of the vehicle.

A lesser demand for hardware resources also reduces the manufacturing cost of embedded devices that use neural networks. The reduction is already relevant for vehicles that belong to the most expensive products a consumer buys, and it is even more pronounced for less expensive consumer products.

The probabilistic training is more resource-hungry than the training of a conventional full-precision network. But this effort will have to be expended only once, whereas the switch from a full-precision network to a binary network saves effort throughout the service life of the network. Therefore, the increased effort for the training will pay for itself very quickly.

Also, the distributions Wₗⱼ and Hₗ contain information about the respective uncertainty of any sampled values wₗⱼ, respectively hₗ. Especially in safety-critical applications, the information how certain some value is may be at least as important as the value itself.

Preferably, at least one distribution Wₗⱼ is chosen to be a Bernoulli-like distribution of values in the set {-1, +1}. Such a distribution has one parameter, namely the probability ωₗⱼ that a sampled weight value is +1. The corresponding probability that a sampled weight value is -1 is given by 1-ωₗⱼ. During training, the probability ωₗⱼ may be stored as a full-precision value, and used as a parameter that is updated in response to the feedback from the loss function.

Preferably, the distribution Aₗ is modelled as a Poisson-Binomial distribution, or as a Gaussian distribution having a mean µ and a variance σₗ². Specifically, if Aₗ is the sum of a plurality of inputs xᵢ (or distributions Xᵢ) multiplied by a plurality of distributions Wₗⱼ of weights wₗⱼ, the resulting random variable is distributed according to a Poisson-Binomial distribution. With an increasing number of such summands, according to the central limit theorem, the Poisson-Binomial distribution quickly converges to something that is increasingly well approximated by a Gaussian distribution. The Gaussian distribution is much easier to compute, and it is characterized by only two parameters, namely its mean µₗ and variance σₗ².

Preferably, the mean µₗ and the variance σₗ² are obtained as a sum of means and variances of distributions that are summed in the weighted sum computation of Aₗ. This further speeds up the computation by exploiting the fact that the weights wₗⱼ are independent random variables. This means that knowledge of the inputs xᵢ, or their respective distributions Xᵢ, and knowledge of the distributions Wₗⱼ suffices to directly compute the mean µₗ and the variance σₗ² for each neuron I of the layer.

Preferably, the distribution Hₗ of output values is chosen to be a Bernoulli-like distribution of values in the set {-1, +1} having an expectation ξₗ that is given by the value ξₗ=Φ(0 | µₗ, σₗ²) of the cumulative density function of the Gaussian distribution at the value 0. This is very efficient because the cumulative density function is implemented in an efficient and numerically stable manner in many available software packages.

In an advantageous embodiment, for at least one neuron I in the layer, at least one output value hₗ is sampled from the distribution Hᵢ. This value is then immediately usable as an input for an adjacent layer of the artificial neural network, be that a binary one or a full-precision one, or as a final output of the network as a whole. This embodiment somehow resembles training with "shadow weights" and drawing binary weight samples whenever a "shadow weight" is used. The important difference is that the sampling now introduces only one single discretization at the very end, whereas the use of "shadow weights" requires multiple rounding operations for the computation of every single output hi.

Alternatively or in combination, in a further advantageous embodiment, at least one distribution Hₗ of outputs hₗ from the at least one layer of the processing chain is used in the place of an input xᵢ in the next layer of the processing chain. This means that with respect to this output, no discretization at all takes place during the transition from the one layer to the next layer. For example, a Bernoulli-like distribution Hₗ may be characterized by its expectation ξₗ, and this expectation ξₗ may be used as a full-precision parameter that is propagated from the one layer to the next layer. At the same time, the full-precisions parameters ωₗⱼ of the Bernoulli-like distributions Wₗⱼ may be stored and updated within each layer. In this manner, training becomes very similar to training of a standard full-precision network. However, instead of training point-estimates over weights in the case of a binary neural network, training operates on the level of full probability distributions over weights and activations. The remarkable property of this scheme is that it is not necessary to approximate these distributions by drawing multiple samples and having to propagate multiple forward passes. Instead, a single full-precision forward pass allows to propagate the whole distributions over weights and activations at once. This in turn allows to compute gradients for the parameters of these distributions and compute updates for the whole distributions over weights with a single error-backpropagation pass.

According to the invention, when configuring the actual artificial neural network, for each finally obtained distribution Wₗⱼ of weights wₗⱼ, at least one value wₗⱼ is sampled and stored in a nonvolatile memory of the actual artificial neural network to be used as the corresponding weight. In this manner, the full information content of the distribution Wₗⱼ may be kept throughout the training. Also, multiple sets of weights can be drawn to produce an ensemble of networks for the same task. For example, this allows for an ensemble-averaging of predictions, which may increase task accuracy and robustness of predictions. Also, high-quality uncertainty estimates over predictions may be obtained.

In a further advantageous embodiment, when configuring the actual artificial neural network, for each finally obtained distribution Wₗⱼ of weights Wₗⱼ, at least one statistical quantity qₗⱼ representing the width of the distribution Wₗⱼ, and/or representing the uncertainty of the value wₗⱼ, is determined and stored in a nonvolatile memory of the actual artificial neural network to be used as the corresponding uncertainty of the value wₗⱼ.

Likewise, statistical quantities of distributions Hₗ may be exploited to evaluate the uncertainty of any output values hₗ. For example, the uncertainty over predictions made by the binary neural network may be obtained from the uncertainty of output values hₗ in the final layer. This uncertainty may be obtained directly from the corresponding distribution Hₗ, from uncertainties of weights wₗⱼ, or any suitable combination of the two.

Specifically, for safety-critical applications like classifying road signs or other objects during operation of an at least partially automated vehicle, it is important that the system reliably reports low certainty in cases where a confident prediction is not possible. This may, for example, happen when a road sign is replaced with a new one. For example, the German sign for a level crossing showed a steam locomotive for a long time until it was amended to show a highspeed train. Binary neural networks that have been trained in a probabilistic manner produce such estimates during regular operation, and these uncertainties can be easily inspected. The learned parameters ωₗⱼ of the distributions Wₗⱼ allow to directly read off uncertainties of the weights wₗⱼ.

The training may preferably be performed on a computer, so the method may be wholly or partially embodied in software. A non-claimed embodiment relates to a computer program with machine-readable instructions that, when executed by a computer, cause the computer to execute the training method.

The training method is used for the manufacturing in particular of any system that is targeted to run on hardware with limited computational resources, wherein these limitations may include, inter alia, limited energy consumption and/or heat generation, limited memory and memory-bandwidth, or limitations in chip-area due to tight cost constraints for mass-produced products.

The invention provides a sensing system for the environment of a vehicle. The sensing system comprises at least one sensor configured to acquire physical measurement data from at least part of the environment and at least one classifier to classify the measurement data as to which objects and/or situations are present in the environment of the vehicle. The at least one classifier comprises at least one binary neural network that has been trained using the method provided by the invention.

Specifically, the at least one classifier comprises at least three binary neural networks embodied in hardware modules that are independent from each other. The binary neural networks, which are preferably of identical structure, have been trained using the method provided by the invention, and weight samples wₗⱼ have been drawn from the finally obtained distributions Wₗⱼ. From each finally obtained distribution Wₗⱼ of weights wₗⱼ, a first weight wₗⱼ has been sampled for use in the first binary neural network, and a second weight wₗⱼ* has been sampled for use in the second binary neural network.

In this manner, the amount of operating safety that is brought about by the redundancy of the hardware modules is further increased. If "bad" samples have been drawn for the configuration of one of the networks by chance and this results in erroneous predictions, such an error may be caught and acted upon.

According to the invention, if there are three or more binary neural networks operating on different weight samples wₗⱼ from the same set of weight distributions Wₗⱼ, the correct prediction may be determined according to a voting mechanism.

The output of the sensing system may be advantageously used as a basis for decisions of a vehicle control system. The invention therefore also provides a control system for a vehicle. This control system comprises at least one sensing system as described above, and also logic that is configured to: in response to the sensing system detecting at least one predetermined object or situation in the environment, actuate a drive train , a steering system, and/or a braking system, of the vehicle. Specifically, this actuation may be directed to avoiding a collision with the object or situation, or to avert other adverse consequences for the vehicle, its driver or for other road users.

Additionally, the invention provides a portable sensing system. This system comprises at least one sensor configured to acquire physical measurement data from a working area and at least one classifier to classify the measurement data as to whether a predetermined condition is present in the working area. The classifier comprises at least one binary neural network that has been trained using the method provided by the invention.

For example, the condition may be an eye disease, such as diabetic retinopathy.

Currently, automatic diagnosis is performed on a server in the cloud. The use of binary neural networks, which becomes practical due to the improved training, permits to perform the computation directly on the camera.

Further improvements of the invention are detailed in the following in combination with a description of preferred embodiments using Figures.

### Preferred embodiments

The Figures show:
- Figure 1:: Exemplary embodiment of method 100;
- Figure 2: Exemplary generation of random variable output Hₗ at a neuron I;
- Figure 3: Exemplary sensing system for a vehicle 3;
- Figure 4: Exemplary portable sensing system 41.

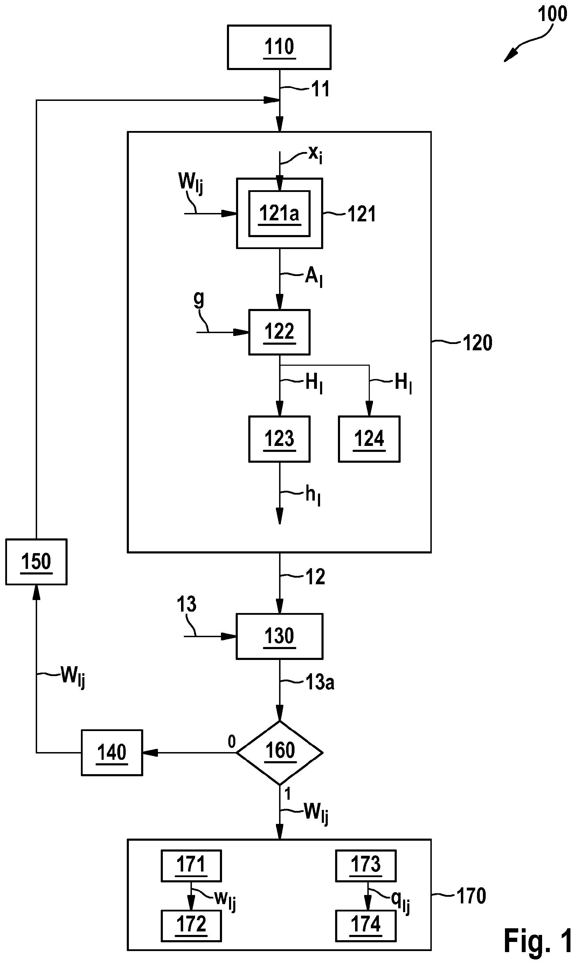

Figure 1 shows an exemplary embodiment of the method 100. In step 110, input values 11 are obtained. In step 120, the input values 11 are processed. In step 121, pre-activations Aₗ for neurons I are created as weighted sums of inputs xᵢ with distributions Wₗⱼ of weights wₗⱼ. Therefore, irrespective of whether the input xᵢ is deterministic or not, the resulting pre-activation of neuron I is a distribution Aₗ of pre-activation values aₗ. I.e., the pre-activation becomes probabilistic. By applying the thresholding function g in step 122, a distribution Hₗ of output values hₗ is produced. Specifically, the thresholding operation may correspond to evaluating a cumulative density function, CDF. In step 123, an output value hₗ is sampled from the distribution Hᵢ. But the distribution Hₗ may also be used directly, according to step 124.

The output values 12 obtained during processing, be they distributions Hᵢ, output values hₗ or any suitable mixture thereof, are rated in step 130 by applying a loss function 13. The rating 13a is checked against a predetermined termination criterion 160. If the criterion 160 is not fulfilled (truth value 0), then the distributions Wₗⱼ of training weights are updated in step 140 (e.g., by updating their parameter ωₗⱼ), and with this update in place, according to step 150, the method 100 branches back to the processing 120. If the criterion 160 is fulfilled (truth value 1), then, in step 170, the finally obtained distributions Wₗⱼ that take the place of the training weights wₗⱼ are exploited to configure the actual artificial neural network 1, 2 that is not shown in Figure 1.

In step 171, weights wₗⱼ are sampled from their respective distributions Wₗⱼ for use as weights in the actual artificial neural network 1, 2. In step 172, these weights are stored in nonvolatile memory of the neural network 1, 2.

In step 173, a statistical quantity qₗⱼ is obtained for each distribution Wₗⱼ to represent the width of this distribution Wₗⱼ, and/or the uncertainty of values wₗⱼ sampled from Wₗⱼ. In step 174, this statistical quantity qₗⱼ is stored in nonvolatile memory of the neural network 1, 2.

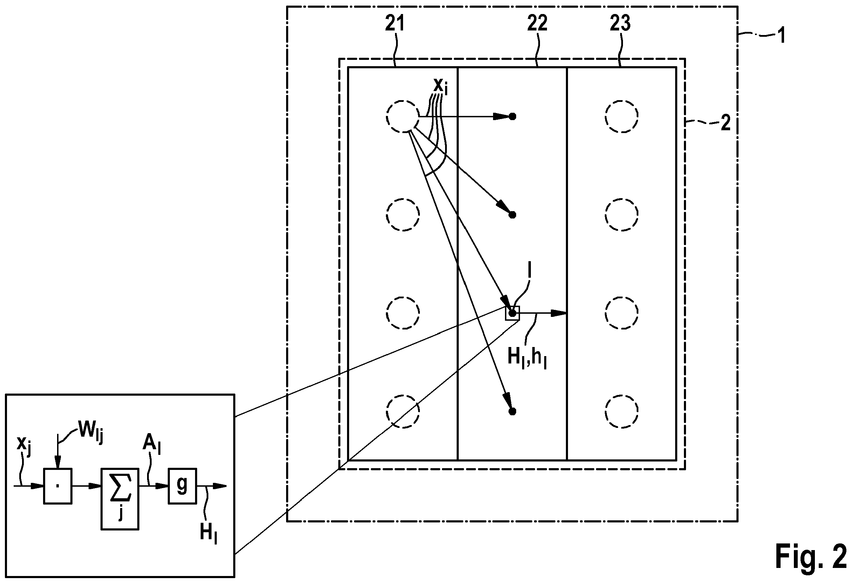

Figure 2 shows a cut-out from a binary neural network 2 that is part of an artificial neural network 1. The cut-out shows three exemplary layers 21-23 of the binary neural network 2. Exemplary neurons are drawn as dashed circles in layers 21 and 23, and as solid points in layer 22.

Output xᵢ from one neuron in layer 21 to all neurons in layer 22 is exemplary shown. The neuron I in layer 22 is of particular interest. It produces a probabilistic output distribution Hₗ, from which output values hₗ may be sampled.

The inset in Figure 2 shows how the output distribution Hₗ is produced. All inputs xⱼ to neuron I are weighted with a respective weight distribution Wₗⱼ, and the results are summed over j. This yields the pre-activation distribution Aₗ, which is then converted into the output distribution Hₗ by applying the thresholding function g. Specifically, this may be done by evaluating the cumulative density function, CDF.

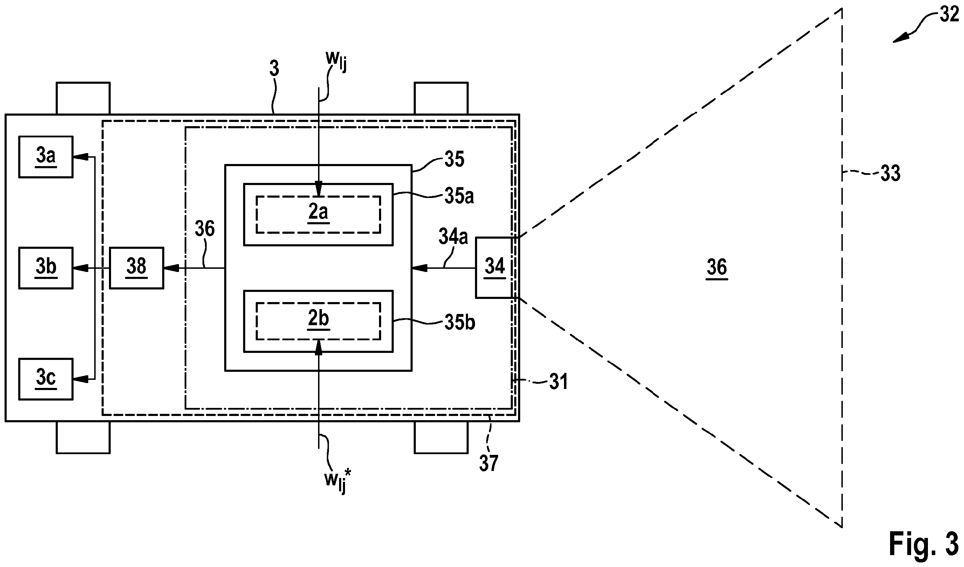

Figure 3 shows an exemplary sensing system 31 for the environment 32 of a vehicle 3. A sensor 34 captures measurement data 34a from a part 33 of the environment 32. The measurement data 34a is fed into the classifier 35 to obtain the objects and/or situations 36 that are present in the observed part 33 of the environment 32.

The classifier 35 comprises two independent hardware modules 35a and 35b. The first hardware module 35a implements a first binary neural network 2a, and the second hardware module 35b implements a second binary neural network 2b. Both networks 2a and 2b have been configured using the same weight distributions Wₗⱼ obtained during training. From each such distribution Wₗⱼ, a first sample wₗⱼ has been taken to configure the first binary neural network 2a, and a second sample wₗⱼ* has been taken to configure the second binary neural network 2b.

In the embodiment shown in Figure 3, the sensing system 31 is part of a control system 37 for the vehicle 3. The control system 37 further comprises actuation logic 38 that is configured to actuate a drive train 3a, a steering system 3b, and/or a braking system 3c, of the vehicle 3 in response to the sensing system 31 detecting at least one predetermined object or situation 36 in the environment 32 of the vehicle 3.

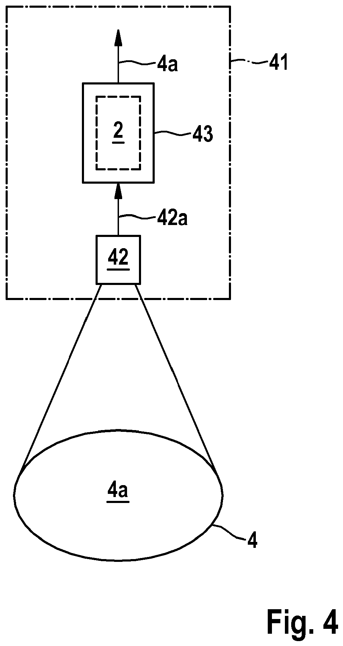

Figure 4 shows an exemplary portable sensing system 41. A sensor 42 captures physical measurement data from a working area 4. The physical measurement data 42a is fed into the classifier 43 with a binary neural network 2 in order to determine whether a condition 4a is present in the working area 4.

## Claims

1. A method (100) for manufacturing a sensing system (31) for the environment (32) of a vehicle (3) or a portable sensing system (41), comprising
• providing at least one sensor (34, 42) configured to acquire physical measurement data (34a) from at least part (33) of the environment (32), respectively configured to acquire physical measurement data (42a) from a working area (4);
• providing at least one classifier (35, 43) to classify the measurement data (34a) as to which objects and/or situations (36) are present in the environment (32) of the vehicle (3), respectively to classify the measurement data (42a) as to whether a predetermined condition (4a) is present in the working area (4), wherein the at least one classifier (35, 43) comprises at least three instances of an artificial neural network (1) that is at least partially implemented as a binary neural network (2) where both the weights associated with at least one layer (21-23) and the outputs of the at least one layer (21-23) can only have one of two possible values, and the instances are embodied in hardware modules that are independent from each other, such that the sensor (34, 42) and the classifier (35, 43) form the sensing system (31, 41);
• receiving (110) training input values (11) for the inputs xᵢ of the artificial neural network (1),
• processing (120) the training input values (11) according to a processing chain defined by the artificial neural network (1), wherein the weights are training weights wₗⱼ, thereby obtaining output values (12),
• applying (130), to the obtained output values (12), a loss function (13) that is configured to rate how good the output values (12) are in the context of the intended application of the artificial neural network (1), in the situation denoted by the training input values (11);
• updating (140) the training weights wₗⱼ and branching back (150) to the processing (120) until the rating (13a) by the loss function (13) meets a predetermined termination criterion (160); and
• configuring (170) the instances of the actual artificial neural network (1, 2) according to the finally obtained training weights wₗⱼ,
wherein the processing (120) comprises, in at least one layer of the processing chain:
• determining (121), for each neuron I in the layer (21-23), a distribution Aₗ of pre-activations aₗ, wherein the distribution Aₗ is a weighted sum of all inputs _{Xj} to that neuron I and wherein each input xⱼ is weighted with a distribution Wₗⱼ of weights wₗⱼ, so that the weights wₗⱼ are random variables according to the distributions Wₗⱼ; and
• determining (122), for each neuron I in the layer (21-23), a distribution Hₗ of output values hₗ by applying, to the distribution Aₗ, a predetermined thresholding function g having two possible output values,
wherein the configuring (170) the instances of the actual artificial neural network (1, 2) comprises: for each finally obtained distribution Wₗⱼ of weights wₗⱼ,
• sampling (171), for each instance of the artificial neural network (1, 2), at least one value wₗⱼ,
• storing (172) the at least one value wᵢⱼ in a nonvolatile memory of the respective instance to be used as the corresponding weight,
and wherein the method (100) further comprises: configuring the at least one classifier (35, 43) to determine, from the predictions made by the instances of the artificial neural network (1, 2), the correct prediction according to a voting mechanism.

2. The method (100) of claim 1, wherein at least one distribution Wₗⱼ is chosen to be a Bernoulli-like distribution of values in the set {-1, +1}.

3. The method (100) of claim 1, wherein the distribution Aₗ is modelled as a Poisson-Binomial distribution, or as a Gaussian distribution having a mean µₗ and a variance σₗ².

4. The method (100) of claim 3, further comprising: obtaining (121a) the mean µₗ and the variance σₗ² as a sum of means and variances of distributions that are summed in the weighted sum computation (121) of Aₗ.

5. The method (100) of any one of claims 3 to 4, wherein the distribution Hₗ of output values is chosen to be a Bernoulli-like distribution of values in the set {-1, +1} having an expectation ξₗ that is given by the value ξₗ₌Φ(0 | µₗ, σₗ²) of the cumulative density function of the Gaussian distribution at the value 0.

6. The method (100) of any one of claims 1 to 5, further comprising sampling (123), for at least one neuron I in the layer (21 -23), at least one output value hₗ from the distribution Hᵢ.

7. The method (100) of any one of claims 1 to 6, wherein the processing (120) further comprises: using (124) at least one distribution Hₗ of outputs hₗ from the at least one layer of the processing chain in the place of an input xᵢ in the next layer (21-23) of the processing chain.

8. The method (100) of any one of claims 1 to 7, wherein the configuring (170) the instances of the actual artificial neural network (1, 2) further comprises: for each finally obtained distribution Wₗⱼ of weights wₗⱼ,
• determining (173) at least one statistical quantity qₗⱼ representing the width of the distribution Wₗⱼ, and/or representing the uncertainty of the value wₗⱼ, and
• storing (174) the quantity qₗⱼ in a nonvolatile memory of the respective instance to be used as the corresponding uncertainty of the value wₗⱼ.

9. A control system (37) for a vehicle (3), comprising at least one sensing system (31) manufactured using the method (100) of any one of claims 1 to 8 and further comprising logic (38) configured to: in response to the sensing system (31) classifying measurement data as
at least one predetermined object or situation (36) in the environment (32), actuate a drive train (3a), a steering system (3b), and/or a braking system (3c), of the vehicle (3).

## Patentansprüche

1. Verfahren (100) zum Herstellen eines Erfassungssystems (31) für die Umgebung (32) eines Fahrzeugs (3) oder eines tragbaren Erfassungssystems (41), umfassend
• Bereitstellen von zumindest einem Sensor (34, 42), der zum Erfassen physikalischer Messdaten (34a) von zumindest einem Teil (33) der Umgebung (32) ausgelegt ist, jeweils zum Erfassen physikalischer Messdaten (42a) von einem Arbeitsbereich (4) ausgelegt;
• Bereitstellen von zumindest einem Klassifizierer (35, 43) zum Klassifizieren der Messdaten (34a) in Bezug darauf, welche Objekte und/oder Situationen (36) in der Umgebung (32) des Fahrzeugs (3) vorhanden sind, bzw. zum Klassifizieren der Messdaten (42a) in Bezug darauf, ob eine vorbestimmte Bedingung (4a) in dem Arbeitsbereich (4) vorhanden ist, wobei der zumindest eine Klassifizierer (35, 43) zumindest drei Fälle eines künstlichen neuronalen Netzes (1) umfasst, das zumindest teilweise als ein binäres neuronales Netz (2) implementiert ist, wobei sowohl die Gewichte, die zumindest einer Schicht (21-23) zugeordnet sind, als auch die Ausgaben der zumindest einen Schicht (21-23) nur einen von zwei möglichen Werten aufweisen können und die Instanzen in Hardwaremodulen ausgeführt sind, die voneinander unabhängig sind, sodass der Sensor (34, 42) und der Klassifizierer (35, 43) das Erfassungssystem (31, 41) bilden;
• Empfangen (110) von Trainingseingabewerten (11) für die Eingaben xᵢ des künstlichen neuronalen Netzes (1),
• Verarbeiten (120) der Trainingseingabewerte (11) gemäß einer Verarbeitungskette, die durch das künstliche neuronale Netz (1) definiert ist, wobei die Gewichte Trainingsgewichte wₗⱼ sind, wodurch Ausgabewerte (12) erhalten werden,
• Anwenden (130), auf die erhaltenen Ausgabewerte (12), einer Verlustfunktion (13), die zum Einstufen, wie gut die Ausgabewerte (12) im Kontext der vorgesehenen Anwendung des künstlichen neuronalen Netzes (1) in der durch die Trainingseingabewerte (11) bezeichneten Situation sind, ausgelegt ist;
• Aktualisieren (140) der Trainingsgewichte Wₗⱼ und Zurückverzweigen (150) zu dem Verarbeiten (120), bis das Einstufen (13a) durch die Verlustfunktion (13) ein vorbestimmtes Abschlusskriterium (160) erfüllt; und
• Konfigurieren (170) der Instanzen des tatsächlichen künstlichen neuronalen Netzes (1, 2) gemäß den letztlich erhaltenen Trainingsgewichten wₗⱼ,
wobei das Verarbeiten (120) in zumindest einer Schicht der Verarbeitungskette umfasst:
• Bestimmen (121), für jedes Neuron 1 in der Schicht (21-23), einer Verteilung Aₗ von Voraktivierungen ai, wobei die Verteilung Aₗ eine gewichtete Summe aller Eingaben xⱼ in dieses Neuron 1 ist und wobei jede Eingabe xⱼ mit einer Verteilung wₗⱼ der Gewichte wₗⱼ gewichtet ist, sodass die Gewichte wₗⱼ Zufallsgrößen gemäß den Verteilungen Wₗⱼ sind; und
• Bestimmen (122), für jedes Neuron 1 in der Schicht (21-23), einer Verteilung Hₗ von Ausgabewerten hi durch Anwenden, auf die Verteilung Aₗ, einer vorbestimmten Schwellwertbildungsfunktion g, die zwei mögliche Ausgabewerte aufweist,
wobei das Konfigurieren (170) der Instanzen des tatsächlichen künstlichen neuronalen Netzes (1, 2) umfasst: für jede letztlich erhaltene Verteilung Wₗⱼ der Gewichte wₗⱼ,
• Abtasten (171), für jede Instanz des künstlichen neuronalen Netzes (1, 2), von zumindest einem Wert wₗⱼ,
• Speichern (172) des zumindest einen Werts wₗⱼ in einem nichtflüchtigen Speicher der jeweiligen Instanz, die als das entsprechende Gewicht verwendet werden soll, und wobei das Verfahren (100) ferner umfasst: Konfigurieren des zumindest einen Klassifizierers (35, 43) zum Bestimmen, aus den durch die Instanzen des künstlichen neuronalen Netzes (1, 2) vorgenommenen Vorhersagen, der korrekten Vorhersage gemäß einem Votierungsmechanismus.

2. Verfahren (100) nach Anspruch 1, wobei zumindest eine Verteilung Wₗⱼ als eine Bernoulli-artige Verteilung von Werten in dem Satz {-1, +1} ausgewählt wird.

3. Verfahren (100) nach Anspruch 1, wobei die Verteilung Aₗ als eine Poisson-Binomialverteilung oder als eine Gauß-Verteilung mit einem Mittelwert µₗ und einer Varianz σₗ² modelliert wird.

4. Verfahren (100) nach Anspruch 3, ferner umfassend: Erhalten (121a) des Mittelwerts µₗ und der Varianz σₗ² als eine Summe von Mittelwerten und Varianzen von Verteilungen, die in der Berechnung der gewichteten Summe (121) von Aₗ summiert werden.

5. Verfahren (100) nach einem der Ansprüche 3 bis 4, wobei die Verteilung Hₗ von Ausgabewerten als eine Bernoulli-artige Verteilung von Werten in dem Satz {-1, +1} ausgewählt wird, wobei eine Erwartung ξₗ besteht, die durch den Wert ξₗ=Φ (0 | µₗ, σₗ²) der kumulativen Dichtefunktion der Gauß-Verteilung bei dem Wert 0 gegeben ist.

6. Verfahren (100) nach einem der Ansprüche 1 bis 5, ferner umfassend ein Abtasten (123), für zumindest ein Neuron 1 in der Schicht (21-23), von zumindest einem Ausgabewert hₗ aus der Verteilung Hᵢ.

7. Verfahren (100) nach einem der Ansprüche 1 bis 6, wobei das Verarbeiten (120) ferner umfasst: Verwenden (124) von zumindest einer Verteilung Hₗ von Ausgaben hi von der zumindest einen Schicht der Verarbeitungskette anstelle einer Eingabe xᵢ in der nächsten Schicht (21-23) der Verarbeitungskette.

8. Verfahren (100) nach einem der Ansprüche 1 bis 7, wobei das Konfigurieren (170) der Instanzen des tatsächlichen künstlichen neuronalen Netzes (1, 2) ferner umfasst: für jede letztlich erhaltene Verteilung Wₗⱼ der Gewichte wₗⱼ,
• Bestimmen (173) von zumindest einer statistischen Menge qₗⱼ, die die Breite der Verteilung Wₗⱼ darstellt und/oder die Unsicherheit des Werts wₗⱼ darstellt, und
• Speichern (174) der Menge qₗⱼ in einem nichtflüchtigen Speicher der jeweiligen Instanz, die als die entsprechende Unsicherheit des Werts wₗⱼ verwendet werden soll.

9. Steuersystem (37) für ein Fahrzeug (3), umfassend zumindest ein Erfassungssystem (31), das unter Verwendung des Verfahrens (100) nach einem der Ansprüche 1 bis 8 hergestellt ist, und ferner umfassend eine Logik (38), die ausgelegt ist zum: als Reaktion darauf, dass das Erfassungssystem (31) Messdaten als zumindest ein vorbestimmtes Objekt oder eine vorbestimmte Situation (36) in der Umgebung (32) klassifiziert, Betätigen eines Antriebsstrangs (3a), eines Lenksystems (3b) und/oder einer Bremsanlage (3c) des Fahrzeugs (3).

## Revendications

1. Procédé (100) de fabrication d'un système de détection (31) pour l'environnement (32) d'un véhicule (3) ou d'un système de détection portable (41), le procédé comprenant les étapes suivantes :
• fournir au moins un capteur (34, 42) configuré pour acquérir des données de mesure physique (34a) d'au moins une partie (33) de l'environnement (32), respectivement configuré pour acquérir des données de mesure physique (42a) d'une zone de travail (4) ;
• fournir au moins un classificateur (35, 43) pour classer les données de mesure (34a) en fonction des objets et/ou des situations (36) présents dans l'environnement (32) du véhicule (3), respectivement, pour classer les données de mesure (42a) en fonction de la présence ou non d'une condition prédéterminée (4a) dans la zone de travail (4), où l'au moins un classificateur (35, 43) comprend au moins trois instances d'un réseau neuronal artificiel (1) qui est au moins partiellement mis en œuvre comme un réseau neuronal binaire (2) dans lequel les poids associés à au moins une couche (21-23) et les sorties de l'au moins une couche (21-23) ne peuvent avoir qu'une de deux valeurs possibles, et les instances sont incorporées dans des modules matériels qui sont indépendants les uns des autres, de sorte que le capteur (34, 42) et le classificateur (35, 43) forment le système de détection (31, 41) ;
• recevoir (110) des valeurs d'entrée d'apprentissage (11) pour les entrées xᵢ du réseau neuronal artificiel (1),
• traiter (120) les valeurs d'entrée d'apprentissage (11) selon une chaîne de traitement définie par le réseau neuronal artificiel (1), où les poids sont des poids d'apprentissage wₗⱼ, afin d'obtenir des valeurs de sortie (12),
• appliquer (130), aux valeurs de sortie obtenues (12), une fonction de perte (13) configurée pour évaluer la qualité des valeurs de sortie (12) dans le contexte de l'application prévue du réseau neuronal artificiel (1), dans la situation indiquée par les valeurs d'entrée d'apprentissage (11) ;
• mettre à jour (140) les poids d'apprentissage wₗⱼ et revenir (150) au traitement (120) jusqu'à ce que l'évaluation (13a) par la fonction de perte (13) réponde à un critère de terminaison prédéterminé (160) ; et
• configurer (170) les instances du réseau neuronal artificiel réel (1, 2) en fonction des poids d'apprentissage finalement obtenus wₗⱼ,
où le traitement (120) comprend, dans au moins une couche de la chaîne de traitement, les étapes suivantes :
• déterminer (121), pour chaque neurone 1 dans la couche (21-23), une distribution Aₗ des pré-activations ai, où la distribution Aₗ est une somme pondérée de toutes les entrées xⱼ à ce neurone 1 et où chaque entrée xⱼ est pondérée avec une distribution Wₗⱼ des poids wₗⱼ, de sorte que les poids wₗⱼ sont des variables aléatoires selon les distributions Wₗⱼ ; et
• déterminer (122), pour chaque neurone 1 dans la couche (21-23), une distribution Hₗ des valeurs de sortie hₗ en appliquant, à la distribution Aₗ, une fonction de seuillage prédéterminée g ayant deux valeurs de sortie possibles,
où la configuration (170) des instances du réseau neuronal artificiel réel (1, 2) comprend : pour chaque distribution de poids wₗⱼ finalement obtenue Wₗⱼ, les étapes suivantes :
• échantillonner (171), pour chaque instance du réseau neuronal artificiel (1, 2), au moins une valeur wₗⱼ,
• stocker (172) l'au moins une valeur wₗⱼ dans une mémoire non volatile de l'instance respective pour l'utiliser comme poids correspondant,
et où le procédé (100) comprend en outre l'étape suivante : configurer l'au moins un classificateur (35, 43) pour déterminer, à partir des prédictions faites par les instances du réseau neuronal artificiel (1, 2), la prédiction correcte selon un mécanisme de vote.

2. Procédé (100) selon la revendication 1, dans lequel au moins une distribution Wₗⱼ est choisie pour être une distribution de type Bernoulli de valeurs dans l'ensemble {-1, +1}.

3. Procédé (100) selon la revendication 1, dans lequel la distribution Aₗ est modélisée comme une distribution binomiale de Poisson, ou comme une distribution gaussienne ayant une moyenne µₗ et une variance σₗ².

4. Procédé (100) selon la revendication 3, comprenant en outre l'étape suivante : obtenir (121a) la moyenne µₗ et la variance σₗ² comme somme de moyennes et de variances de distributions qui sont additionnées dans le calcul de la somme pondérée (121) de Aₗ.

5. Procédé (100) selon l'une quelconque des revendications 3 à 4, selon lequel la distribution Hₗ des valeurs de sortie est choisie pour être une distribution de type Bernoulli de valeurs dans l'ensemble {-1, +1} ayant une espérance ξₗ qui est donnée par la valeur ξₗ=Φ (0 I µₗ, σₗ²) de la fonction de densité cumulative de la distribution gaussienne à la valeur 0.

6. Procédé (100) selon l'une quelconque des revendications 1 à 5, comprenant en outre d'échantillonner (123), pour au moins un neurone 1 de la couche (21-23), au moins une valeur de sortie hₗ à partir de la distribution Hᵢ.

7. Procédé (100) selon l'une quelconque des revendications 1 à 6, dans lequel le traitement (120) comprend en outre l'étape suivante : utiliser (124) au moins une distribution Hₗ de sorties hₗ de l'au moins une couche de la chaîne de traitement à la place d'une entrée xᵢ dans la couche suivante (21-23) de la chaîne de traitement.

8. Procédé (100) selon l'une quelconque des revendications 1 à 7, dans lequel la configuration (170) des instances du réseau neuronal artificiel réel (1, 2) comprend en outre : pour chaque distribution de poids wₗⱼ finalement obtenue Wₗⱼ, les étapes suivantes :
• déterminer (173) au moins une quantité statistique qₗⱼ représentant la largeur de la distribution Wₗⱼ, et/ou représentant l'incertitude de la valeur wₗⱼ, et
• stocker (174) la quantité qₗⱼ dans une mémoire non volatile de l'instance respective à utiliser comme incertitude correspondante de la valeur Wₗⱼ.

9. Système de commande (37) pour un véhicule (3), comprenant au moins un système de détection (31) fabriqué selon le procédé (100) de l'une quelconque des revendications 1 à 8, et comprenant en outre une logique (38) configurée pour : en réponse à la classification par le système de détection (31) de données de mesure comme étant au moins un objet ou une situation prédéterminés (36) dans l'environnement (32), actionner un groupe motopropulseur (3a), un système de direction (3b) et/ou un système de freinage (3c) du véhicule (3).
